(19) Europäisches Patentamt
European Patent Office
Office européen des brevets

(11) **EP 3 668 770 B1**

(12) **EUROPÄISCHE PATENTSCHRIFT**

(45) Veröffentlichungstag und Bekanntmachung des Hinweises auf die Patenterteilung:
**05.05.2021  Patentblatt 2021/18**

(51) Int Cl.:
*G07C 5/08* (2006.01)          *B60R 16/02* (2006.01)
*B60W 40/09* (2012.01)

(21) Anmeldenummer: **18755768.1**

(22) Anmeldetag: **09.08.2018**

(86) Internationale Anmeldenummer:
**PCT/EP2018/071700**

(87) Internationale Veröffentlichungsnummer:
**WO 2019/034540 (21.02.2019 Gazette 2019/08)**

(54) **VERFAHREN UND VORRICHTUNG ZUM ERMITTELN EINES FAHRVERHALTENS**

METHOD AND DEVICE FOR DETERMINING A DRIVING BEHAVIOUR

PROCÉDÉ ET DISPOSITIF POUR DÉTERMINER UN COMPORTEMENT DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2017  DE 102017214241**

(43) Veröffentlichungstag der Anmeldung:
**24.06.2020  Patentblatt 2020/26**

(73) Patentinhaber: **Robert Bosch GmbH**
**70442 Stuttgart (DE)**

(72) Erfinder:
• **BAKUCZ, Peter**
  **86836 Klosterlechfeld (DE)**
• **MARTIN RODRIGUEZ, Henar**
  **70563 Stuttgart (DE)**

(56) Entgegenhaltungen:
WO-A1-2017/049137     JP-A- 2015 030 365
US-A1- 2011 043 635     US-A1- 2014 191 858

EP 3 668 770 B1

**Beschreibung**

Stand der Technik

Die vorliegende Erfindung betrifft ein Verfahren und eine Vorrichtung zum Ermitteln eines Fahrverhaltens eines Fahrers eines Fahrzeugs.

Aus dem Stand der Technik sind Bestrebungen zu erkennen, das Fahrverhalten eines Fahrers eines Fahrzeugs auf öffentlichen Straßen zu ermitteln. Das Fahrverhalten lässt sich insbesondere durch eine Aggressivität von Fahrmanövern, Rücksichtnahme auf andere Fahrzeuge und/oder Anzahl und Höhe von Geschwindigkeitsüberschreitungen darstellen. Dazu wird ein Signal eines Beschleunigungssensors ausgewertet. Unter Aggressivität ist insbesondere ein schnelles und/oder abruptes Ändern einer Geschwindigkeit und/oder einer Fahrtrichtung des Fahrzeugs zu verstehen.

Das ermitteln von Fahrverhalten einzelner Fahrer ist insbesondere für Versicherungsgesellschaften von Interesse. Auf diese Weise lassen sich Versicherungstarife um ein persönliches Merkmal erweitern, sodass beispielsweise aggressive Fahrer eine höhere Prämie zu zahlen haben als zurückhaltende Fahrer.

Beispielsweise beschreibt die US 2014 / 0191858 A1 ein System zum charakterisieren eines Fahrverhaltens eines Fahrers anhand von verschiedenen Fahrvorgänge. Das Dokument US 2015 / 0081404 A1 offenbart einen Vergleich eines Fahrverhaltens eines Fahrers mit einem normalen Fahrverhalten. Schließlich offenbart die WO 2015 / 121639 A1 Wavelet-Transformationen und Vergleiche mit einer Datenbank gespeicherten Templates, um verschiedene Fahrvorgänge, die auf das Fahrverhalten schließen lassen, zu erkennen.

Allerdings ist es schwierig, eine Intensität eines Fahrvorgangs allgemein zu ermitteln, da unterschiedliche Charakteristiken des Signals eines Beschleunigungssensors bei unterschiedlichen Beschleunigungssensoren sehr verschieden sein können. Beispielsweise können Amplituden, die dieselbe Beschleunigung anzeigen, bei unterschiedlichen Beschleunigungssensoren unterschiedlich groß sein. Auch können unterschiedliche Untergründe, auf denen sich ein Fahrzeug bewegt, zu unterschiedlichen Amplituden im Signal des Beschleunigungssensors führen.

Manche Systeme aus dem Stand der Technik basieren auf der Identifikation von Fahrvorgängen durch die Verwendung von Sensorinformationen aus fahrzeugeigenen Diagnosesystemen. Diese Lösung führt zu erheblichen Datenabfragen und kann die Sicherheit des Fahrzeugs beeinträchtigen, sodass aufwändige Entwicklungen notwendig sind.

Wird eine Datenfusion von unterschiedlichen Sensorsignalen, wie beispielsweise Signale von Beschleunigungssensoren und GPS-Systemen, so wird eine hohe Performanz des die Fusion durchführenden Steuergeräts benötigt, da erheblicher Rechenaufwand vonnöten ist. dies führt zu hohen Stückkosten entsprechender Vorrichtungen zum Erkennen des Fahrverhaltens.

Lösungen, die auf einer Kalibrierung eines Gravitationssensors beruhen, funktionieren nur dann zufriedenstellen, wenn die Kalibrierung auf einem ebenen Untergrund durchgeführt wird. Außerdem müssen zusätzliche und teils aufwändige Analysen durchgeführt werden, um festzustellen, ob das Fahrzeug einen Abhang hinauf oder hinunterfährt, oder ob das Fahrzeug rückwärts fährt.

Grundsätzlich sind in einem dreidimensionalen Signal eines Beschleunigungssensors mehrere Komponenten überlagert. Dabei handelt es sich insbesondere um einen Beschleunigungs-/Bremsanteil, um einen Kurvenfahrtanteil und um einen Rauschanteil. Der Beschleunigungs-/Bremsanteil beschreibt Signale, die durch fahrerinitiierte Beschleunigungsvorgänge und Abbremsvorgänge des Fahrzeugs zum Verändern einer Geschwindigkeit des Fahrzeugs entstehen. Der Kurvenfahrtanteil beschreibt Signale, die durch eine fahrerinitiierte Kurvenfahrt des Fahrzeugs entstehen. Alle diese Komponenten weisen ein ähnlich breites Spektrum auf, weshalb ein Filtern mit bekannten spektralen Methoden nicht möglich ist.

Offenbarung der Erfindung

Durch das erfindungsgemäße Verfahren und die erfindungsgemäße Vorrichtung lässt sich unabhängig von einem Fahrzeugtyp ein Fahrverhalten ermitteln. Dieselben Fahrvorgänge führen bei verschiedenen Fahrzeugen zu verschiedenen Signalen. Daher ist es nicht möglich, jedes einzelne Signal spezifisch zu analysieren. Durch das erfindungsgemäße Verfahren und die erfindungsgemäße Vorrichtung ist nicht notwendig, solche expliziten Analysen durchzuführen. Dennoch kann zuverlässig das Fahrverhalten ermittelt werden.

Das Ermitteln des Fahrverhaltens ist insbesondere unabhängig von Eigenschaften des Untergrunds, auf dem sich das Fahrzeug befindet. Auch ist das Ermitteln des Fahrverhaltens unabhängig davon, ob sich das Fahrzeug vorwärts oder rückwärts oder bergauf oder bergab bewegt. Ebenso kann das Ermitteln des Fahrverhaltens in Echtzeit durchgeführt werden.

Das erfindungsgemäße Verfahren zum Ermitteln eines Fahrverhaltens eines Fahrers umfasst die folgenden Schritte: Zunächst erfolgt ein Erfassen eines dreidimensionales Signals eines Beschleunigungssensors, wobei das dreidimensionale Signal einen Beschleunigungswert in je eine unabhängige Raumrichtung umfasst. Der Beschleunigungssensor dient somit zum erfassen von Beschleunigungen entlang dieser drei Raumrichtungen. Allerdings ist nicht bekannt, welche Ausrichtungen diese Raumrichtungen aufweisen. Durch das erfindungsgemäße Verfahren ist eine solche Ausrichtung aber auch nicht notwendig, um das Fahrverhalten zu ermitteln. Als weiterer Schritt erfolgt ein Ermitteln einer Kenngröße des dreidimensionalen Signals. Die Kenngröße ist ein Maß für eine Aggressivität eines Fahrverhaltens des Fahrers, insbesondere steigt die Aggressivität mit der Kenngröße an. Dabei ist vorgesehen, dass die Kenngröße entweder eine fraktale Dimension einer Einbettung des dreidimensionalen Signals und/oder eine Kolmogorow-Entropie des dreidimensionalen Signals umfasst. Anhand dieser Kenngrößen lässt sich das Fahrverhalten einfach und aufwandsarm bestimmen. Insbesondere sind keine genauen Untersuchungen des dreidimensionalen Signals notwendig. Als letzter Schritt erfolgt ein Ausgeben des Fahrverhaltens basierend auf der Kenngröße über eine Ausgabevorrichtung. Somit kann das Fahrverhalten weiteren Systemen zur Verfügung gestellt werden. Da insbesondere ermöglicht ist, das Fahrverhalten in Echtzeit zu bestimmen, kann das Fahrverhalten auch in Echtzeit an eine zentrale Instanz übertragen werden. Somit liegen stets aktuelle Daten über das Fahrverhalten vor.

Die erfindungsgemäße Vorrichtung zum Ermitteln eines Fahrverhaltens eines Fahrers umfasst zumindest einen Beschleunigungssensor, eine Ausgabevorrichtung, und ein Steuergerät. Dabei ist vorgesehen, dass der zumindest eine Beschleunigungssensor zum Erfassen von Beschleunigungswerten in drei unabhängigen Raumrichtungen ausgebildet ist. Der Beschleunigungssensor kann somit ein dreidimensionales Signal ausgeben, wobei jede Dimension des Signals eine Beschleunigung in eine der Raumrichtungen anzeigt. Die Ausgabevorrichtung dient zum Ausgeben des Fahrverhaltens. Insbesondere ist die Ausgabevorrichtung mit einem drahtlosen Sender versehen, um das ermittelte Fahrverhalten drahtlos an einen Empfänger übermittein zu können. Der Empfänger kann insbesondere eine übergeordnete Steuereinheit sein. Das Steuergerät ist ausgebildet ist, das dreidimensionales Signal des Beschleunigungssensors zu erfassen. Außerdem ist das Steuergerät ausgebildet, eine Kenngröße des dreidimensionalen Signals zu berechnen. Die Kenngröße ist ein Maß für eine Aggressivität des Fahrverhaltens. Insbesondere ist vorgesehen, dass die Aggressivität mit steigender Kenngröße ansteigt. Die Kenngröße umfasst entweder eine fraktale Dimension einer Einbettung des dreidimensionalen Signals und/oder eine Kolmogorow-Entropie des dreidimensionalen Signals. Die Kenngröße ist einfach und aufwandsarm zu ermitteln. Dabei ist durch die Kenngröße gleichzeitig sichergestellt, dass ein Fahrverhalten sicher und zuverlässig erkannt werden kann.

Die Begriffe "fraktale Dimension", "Einbettung", und "Kolmogorow-Entropie" sind insbesondere durch ihren Definitionen in der Mathematik zu verstehen. Unter dem dreidimensionalen Signal ist zu verstehen, dass das Signal Werte aus drei Dimensionen umfasst.

Die Unteransprüche zeigen bevorzugte Weiterbildungen der Erfindung.

Bevorzugt ist vorgesehen, dass unterschiedliche Wahrscheinlichkeitsverteilungen für die Kolmogorow-Entropie des dreidimensionalen Signals vordefiniert sind. Dabei ist jeder Wahrscheinlichkeitsverteilung ein vordefiniertes Fahrverhalten zugeordnet ist. So kann anhand eines Vergleichs zwischen der Anzahl des tatsächlichen Auftretens bestimmter Kolmogorow-Entropien und der wahrscheinlichen Anzahl des Auftretens besagter Kolmogorow-Entropien festgestellt werden, welches Fahrverhalten vorliegt. So treten statistisch gesehen bei moderatem Fahrverhalten mittlere Kolmogorow-Entropien am häufigsten auf. Ist dies auch in der Realität der Fall, so ist davon auszugehen, dass ein moderates Fahrverhalten zugrunde liegt. Treten hingegen in der Realität mehr kleinere als mittlere Kolmogorow-Entropien auf, so ist von einem normalen Fahrverhalten auszugehen.

Bevorzugt ist vorgesehen, dass steigende Werte der Kolmogorow-Entropie des dreidimensionalen Signals eine zunehmende Aggressivität des Fahrverhaltens anzeigen. Somit zeigen größere Kolmogorow-Entropien ein hohes Aggressionspotential des Fahrverhaltens, während kleinere Kolmogorow-Entropien ein geringeres Aggressionspotential des Fahrverhaltens zeigen. Somit lässt sich ein Fahrverhalten einfach und aufwandsarm bestimmen.

Bevorzugt erfolgt die Einbettung durch eine nichtlineare Transformation des dreidimensionalen Signals des Beschleunigungssensors. Dabei ist vorgesehen, dass die Nichtlinearität durch lineare Annahmen approximiert wird. Durch die nichtlineare Transformation wird ein Beschleunigungs-/Bremsanteil von einem Kurvenfahrtanteil des dreidimensionalen Signals getrennt. Somit ist eine separate Untersuchung des Beschleunigungs-/Bremsanteil sowie des Kurvenfahrtanteil ermöglicht. Ein Fahrverhalten kann daher separat anhand von Geschwindigkeitsänderungen und/oder Kurvenfahrten ermittelt werden.

Die fraktalen Dimensionen für den Beschleunigungs-/Bremsanteil und den Kurvenfahrtanteil werden insbesondere separat ermittelt. Somit lässt sich das Signal detailliert untersuchen, wobei als Fahrverhalten die höhere der beiden ermittelten fraktalen Dimensionen als Kenngröße verwendet wird. So kann es vorkommen, dass der Fahrer beispielsweise ein aggressives Kurvenfahrtverhalten innehat, nicht jedoch aggressiv das Fahrzeug beschleunigt und/oder abbremst. Dennoch ist das Fahrverhalten insgesamt als aggressiv einzustufen.

Vorteilhafterweise sind Intervalle von fraktalen Dimensionen vordefiniert, wobei jedem Intervall ein unterschiedliches Fahrverhalten zugewiesen ist. Wird eine fraktale Dimension als Kenngröße berechnet, so lässt sich das Fahrverhalten daraus ermitteln, dass überprüft wird, in welches Intervall die fraktale Dimension fällt. Da jedem Intervall bereits ein entsprechendes Fahrverhalten zugeordnet ist, kann somit einfach und aufwandsarm ermitteln.

Eine steigemde fraktale Dimensionen zeigt insbesondere eine zunehmende Aggressivität des Fahrverhaltens an. Somit kann allein aus der fraktalen Dimension erkannt werden, wie aggressiv ein Fahrer fährt. Die fraktale Dimension stellt somit ein sicheres und zuverlässiges Maß für das Fahrverhalten dar. Ein Ermitteln des Fahrverhaltens ist dadurch einfach und aufwandsarm möglich.

Bevorzugt ist vorgesehen, dass die Kenngröße aus dem ungefilterten und/oder unbearbeiteten dreidimensionalen Signal des Beschleunigungssensors ermittelt wird. Somit ist keine aufwändige Filterung und/oder Bearbeitung des dreidimensionalen Signals notwendig. Dies spart insbesondere Rechenaufwand beim Ermitteln des Fahrverhaltens.

Gemäß einem weiteren Erfindungsaspekt wird ein Computerprogrammprodukt (z.B. ein Datenspeicher) vorgeschlagen, auf welchem Instruktionen gespeichert sind, die einen programmierbaren Prozessor in die Lage versetzen, die Schritte eines Verfahrens wie zuvor beschrieben durchzuführen. Das Computerprogrammprodukt kann als CD, DVD, Blu-ray-Disc, Flash-Speicher, Festplatte, RAM/ROM, Cache etc. ausgestaltet sein.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1    eine schematische Ansicht eines Ablaufplans eines Verfahrens gemäß einem Ausführungsbeispiel der Erfindung,

Figur 2    eine schematische Ansicht einer Vorrichtung gemäß einem Ausführungsbeispiel der Erfindung,

Figur 3    eine schematische Abbildung des Verlaufs einer Bestimmung der Kolmogorow-Entropie,

Figur 4    eine schematische Abbildung einer Zuordnung verschiedener Fahrverhalten zu unterschiedlichen Werten der Kolmogorow-Entropie,

Figur 5    eine schematische Abbildung des Ablaufs einer Einbettung durch nichtlineare Transformation,

Figur 6    eine schematische Abbildung eines ersten dreidimensionalen Signals eines Beschleunigungssensors nach der Einbettung,

Figur 7    eine schematische Abbildung eines zweiten dreidimensionalen Signals eines Beschleunigungssensors nach der Einbettung, und

Figur 8    eine schematische Abbildung eines dritten dreidimensionalen Signals eines Beschleunigungssensors nach der Einbettung.

Ausführungsformen der Erfindung

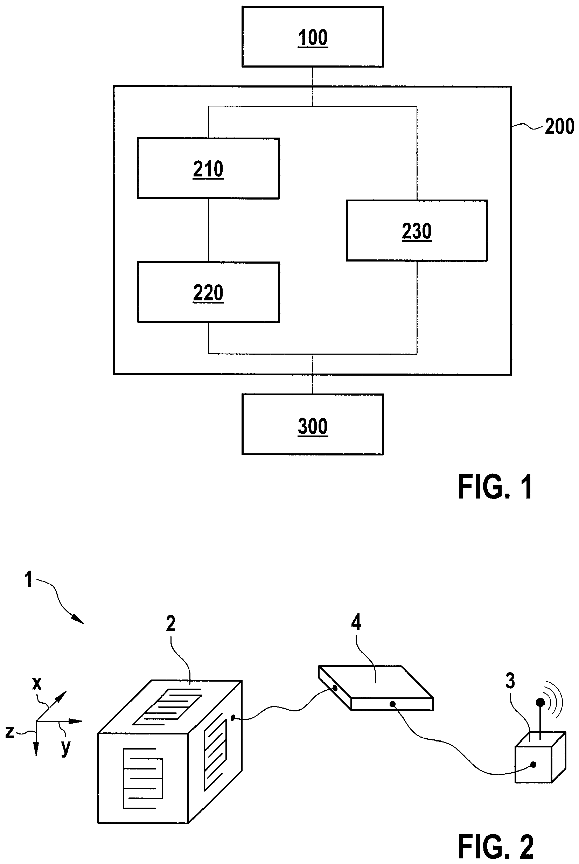

Figur 1 zeigt schematisch einen Ablaufplan eines Verfahrens gemäß einem Ausführungsbeispiel der Erfindung. Figur 2 zeigt eine Vorrichtung 1 gemäß einem Ausführungsbeispiel der Erfindung. Es ist vorgesehen, dass die Vorrichtung 1 an einem Fahrzeug angebracht werden kann, um anhand des Verfahrens ein Fahrverhalten des Fahrers des Fahrzeugs zu ermitteln.

Die Vorrichtung 1 umfasst einen Beschleunigungssensor 2, eine Ausgabevorrichtung 3, und ein Steuergerät 4, Das Steuergerät 4 ist mit dem Beschleunigungssensor 2 und der Ausgabevorrichtung 3 zu Signalübertragung verbunden. Außerdem ist das Steuergerät 4 bevorzugt eingerichtet, das in Figur 1 gezeigte Verfahren auszuführen.

Das Verfahren umfasst die folgenden Schritte: zunächst erfolgt ein Erfassen 100 eines dreidimensionalen Signals des Beschleunigungssensors 1. Der Beschleunigungssensor 1 kann dazu in drei unabhängige Raumrichtungen x, y, und z eine Beschleunigung erfassen. Somit zeigt das dreidimensionale Signal für jede Raumrichtung einen Beschleunigungswert an. Allerdings lässt sich aus dem dreidimensionalen Signal keinerlei Information über konkrete Beschleunigungen des Fahrzeugs ableiten, da nicht bekannt ist, welche der Raumrichtungen welche Ausrichtung im Fahrzeug aufweisen. Da eine Kalibrierung des Beschleunigungssensors 2 innerhalb des Fahrzeugs aufwändig und oftmals ungenau ist, wird auf eine solche Kalibrierung verzichtet.

Anschließend erfolgt ein Berechnen 200 einer Kenngröße des dreidimensionalen Signals. Das Berechnen 200 kann insbesondere auf zwei unterschiedliche Arten erfolgen. In beiden Fällen ist vorteilhaft, dass ein Fahrverhalten ermittelt werden kann, ohne dass die Ausrichtungen der Raumachsen x, y, z bekannt sein müssen.

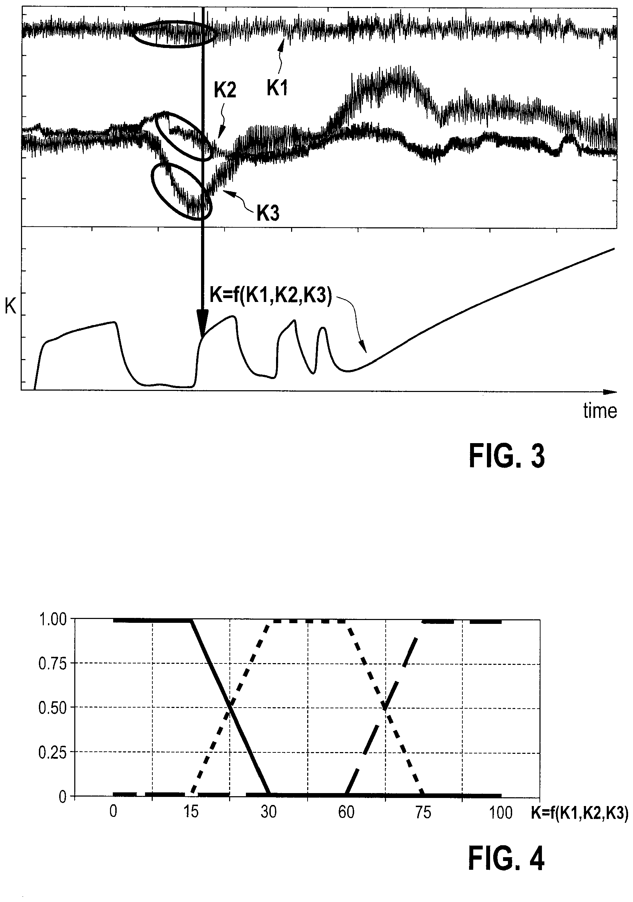

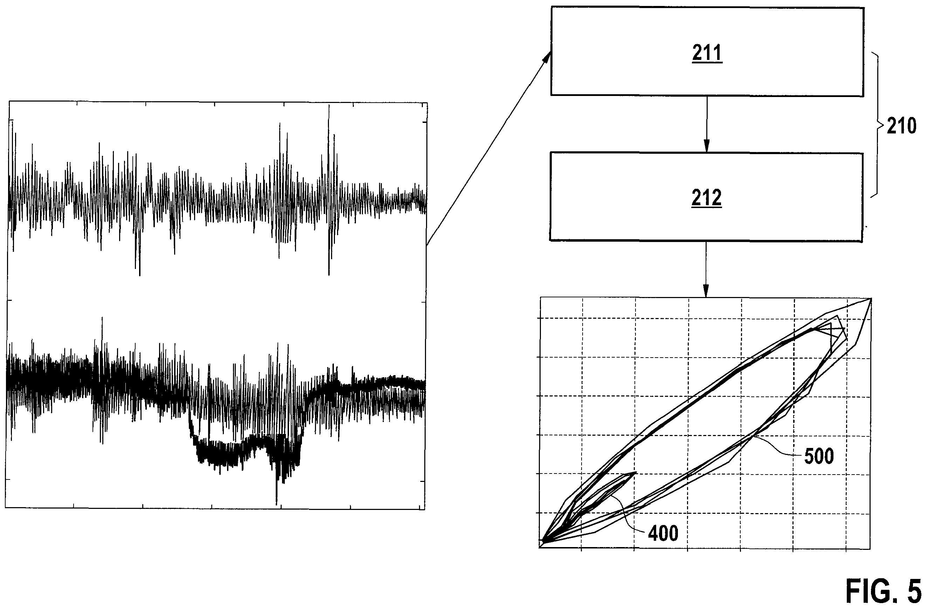

Eine Möglichkeit das Berechnen 200 der Kenngröße durchzuführen, umfasst eine Einbettung 210 des dreidimensionalen Signals und ein anschließendes Feststellen 220 einer fraktalen Dimension des Signals. Diese Möglichkeit ist nachfolgend mit Bezug auf die Figuren 5 bis 8 beschrieben. Alternativ kann ein Feststellen 230 einer Kolmogorow-Entropie des dreidimensionalen Signals erfolgen. Dies ist nachfolgend mit Bezug auf die Figuren 3 und 4 beschrieben. Somit ist die Kenngröße entweder die fraktale Dimension oder die Kolmogorow-Entropie. Auch ist eine Kombination möglich.

Die berechnete Kenngröße ist insbesondere ein Maß für das Fahrverhalten. Somit erfolgt ein Schritt des Ausgebens 300 des Fahrverhaltens über eine Ausgabevorrichtung 3 basierend auf der Kenngröße. Die Ausgabevorrichtung 3 ist vorteilhafterweise eine Sendestation, sodass das Fahrverhalten an einen Empfänger übersandt werden kann. Somit lassen sich die Fahrverhalten verschiedener Fahrer durch eine zentrale Einheit speichern und weiterverarbeiten. Ebenso ist ein lokales Speichern des ermittelten Fahrverhaltens in den jeweiligen Vorrichtungen 1 möglich.

Das dreidimensionale Signal des Beschleunigungssensors 2 umfasst insbesondere einen Beschleunigungs-/Bremsanteil, einen Kurvenfahrtanteil, und einen Rauschanteil. Alle diese Teile überlagern sich zu dem dreidimensionalen Signal. Wird die Kenngröße durch das Einbetten 210 und Feststellen 200 der fraktalen Dimension berechnet, so erfolgt ein Aufteilen des Signals zumindest hinsichtlich des Beschleunigungs-/Bremsanteils und des Kurvenfahrtanteils. Bei Feststellen der Kolmogorow-Entropie hingegen wird ein solches Aufteilen nicht benötigt.

Nachfolgend wird anhand der Figuren 3 und 4 erklärt, wie das Fahrverhalten anhand der Kolmogorow-Entropie als Kenngröße ermittelt werden kann. Dazu wird die Kolmogorow-Entropie in drei Dimensionen (1,2,3) K = (K1, K2, K3) durch Korrelationsintegrale wie folgt bestimmt.

$$K = f(K1, K2, K3) = \sum_{i=1}^{3} \lim_{m \to \infty} \lim_{r \to 0} K_i^m(r)$$

Dabei ist

$$K_i^m(r) = \frac{1}{k\Delta t} \ln \frac{P^m(r)}{P^{m+k}(r)}$$

und

*l* = 1, 2, 3 repräsentiert die drei Dimensionen des Signals des Beschleunigungssensors 2
*k* ist eine Konstante, insbesondere eine hinreichend kleine Integer-Zahl m ist die Dimension der Einbettung
$P^m(r)$ ist das Spektrum des Signals des Beschleunigungssensors 2, das insbesondere in einem Puffer gespeichert ist.

Aus Figur 3 ist beispielhaft gezeigt, wie die Kenngröße K des Signals ermittelt wird. Diese Kenngröße stellt ein Maß für das Fahrverhalten dar. Dabei bedeuten hohe Werte von K, dass das Fahrverhalten als aggressiv zu bewerten ist.

Um Fluktuationen zu vermeiden wird die zuvor beschriebene Gleichung $K_i^m(r) = \frac{1}{k\Delta t} \ln \frac{P^m(r)}{P^{m+k}(r)}$ über vier verschiedene Anlaufwerte des Puffers gemittelt, während gleichzeitig die Abhängigkeit der Charakteristik $K(1,2,3)$ von m durch die Methode der kleinsten Quadrate durch folgende Funktion angenähert

$$K_{i=1,2,3}^m(r) = K_2 + \frac{v}{4L\Delta t} \sum_{i=1}^{L} \frac{1}{l} \ln\left(\frac{m+2l}{m}\right)$$

Figur 4 zeigt schematisch einzelne Wahrscheinlichkeitsverteilungen der Kolmogorow-Entropien K des dreidimensionalen Signals. Dabei ist vorgesehen, dass jeder Wahrscheinlichkeitsverteilung ein Fahrverhalten zugeordnet ist. So bedeutet die durchgezogene Linie in Figur 4 beispielsweise ein normales Fahrverhalten, die gepunktete Linie ein moderates Fahrverhalten und die gestrichelte Linie ein aggressives Fahrverhalten. Wie zuvor bereits beschrieben bedeuten zunehmende Werte der Kolmogorow-Entropie K ein zunehmend aggressives Fahrverhalten. So ist in Figur 4 gezeigt, dass bei aggressivem Fahrverhalten hohe Werte der Kolmogorow-Entropie K am wahrscheinlichsten sind, während bei moderatem Fahrverhalten mittlere Werte der Kolmogorow-Entropie K am wahrscheinlichsten sind. Bei normalem Fahrverhalten sind kleine Werte der Kolmogorow-Entropie K am wahrscheinlichsten.

Durch die in Figur 4 gezeigte Kategorisierung kann einfach und aufwandsarm ein Fahrverhalten des Fahrers aus dem dreidimensionalen Beschleunigungssignal ermittelt werden. Hierzu ist lediglich die Häufigkeitsverteilung der auftretenden Werte der der Kolmogorow-Entropie *K* zu ermitteln. Anhand der Wahrscheinlichkeitsverteilungen lässt sich diese Anzahl dann einem Fahrverhalten eindeutig zuordnen.

Die Figuren 5 bis 8 zeigen eine alternative Möglichkeit des Berechnens der Kenngröße. Die Idee dahinter ist, dass sich der Beschleunigungs-/Bremsanteil optimal durch eine Mannigfaltigkeit geringer Dimension approximieren lässt. Durch Projektion auf besagte Mannigfaltigkeit erfolgt eine Trennung des Beschleunigungs-/Bremsanteil von dem Kurvenfahrtanteil.

Beispielsweise kann das dreidimensionale Signal wie folgt sein:

$$\{s_n\}(n = 1,...,\bar{N})$$

wobei N die Anzahl an Messpunkten ist.

Dieses dreidimensionale Signal kann in einen mehrdimensionalen effektiven Phasenraum ausgefaltet werden, wobei die folgenden delay-Koordinaten verwendet werden:

$$s_n = S_{n-(m-1)t},...,s_n$$

mit $m = 1,...,M$,
wobei $M$ eine Größe des Attraktors und $t$ ein delay ist.

Mathematisch gesehen ist das dreidimensionale Signal eine skalare Messung eines deterministischen dynamischen Systems. Auch wenn hier ein deterministisches dynamisches System nicht angenommen wird, so sind dennoch serielle Abhängigkeiten in dem dreidimensionalen Signal vorhanden, die dazu führen, dass die delay-Vektoren $s_n$ den verfügbaren m-dimensionalen Raum auf inhomogene Weise füllen.

Zum Durchführen der Einbettung 210 erfolgt zunächst eine Wahl 211 von drei Parametern:

- Die Länge des einbettenden Fensters,
- die Dimension $d$ der lokalen Mannigfaltigkeit, auf die projiziert werden soll, und
- den Durchmesser $d_n$ der Nachbarschaft, die für die lineare Approximation genutzt wird.

Mit diesen Parametern wird eine eingebettete Transformation 212 in den Phasenraum durchgeführt. Das einbettende Fenster kann verwendet werden, um Komponenten auszuwählen und die Nachbarschaft dient zum Festlegen einer Längenskalierung in dem Phasenraum. Diese Parameter stellen somit eine Beschreibung dar um die Unterschiede zwischen dem Beschleunigungs-/Bremsanteil und dem Kurvenfahrtanteil auszudrücken. Hier weist der Beschleunigungs-/Bremsanteil eine viel größere Amplitude auf als der Kurvenfahrtanteil und das Spektrum des Beschleunigungs-/Bremsanteils erscheint kürzer als das Spektrum des Kurvenfahrtanteils.

Das Ermitteln des Fahrverhaltens des Fahrers erfolgt anhand der Kenngröße der fraktalen Dimension. Je größer die fraktale Dimension ist, desto größer ist die Aggressivität des Fahrverhaltens. Dazu werden T als die topologische Dimension, FD als die fraktale Dimension und H als der Hurst-Exponent verwendet. Für die Einbettung gilt, dass FD > 2, da zwei räumliche Dimensionen vorliegen, und eine weitere Dimension in der Bilddichte des Spektrums des Beschleunigungs-/Bremsanteils sowie des Spektrums des Kurvenfahrtanteils zu sehen ist. Die Parameter H und FD können anhand der folgenden Gleichung abgeschätzt werden:

$$E[\Delta^2 f] = c[\Delta^H d]^2$$

wobei

$E$ ein Erwartungsoperator,
$\Delta f$ ein Intensitätsoperator,
$\Delta d$ ein räumlicher Abstand, und
$c$ eine Skalierungskonstante ist.

Werden in dieser Gleichung $E = 3 - FD$ und $\kappa = E(|\Delta f|)$ ersetzt, dann ergibt sich

$$E(|\Delta f|) = \kappa \Delta d^H$$

Durch das Anwenden der Logarithmusfunktion auf beiden Seiten dieser Gleichung erhält man

$$\log E(|\Delta f|) = \log \kappa + H \log \Delta d$$

Der Hurst-Exponent H kann durch lineare Regression mittels der Methode der kleinsten Quadrate ermittelt werden, um eine Grauleveldifferenz gegenüber k in doppelt logarithmischer Skala abzuschätzen. Dabei variiert k von 1 zu einem maximalen Wert s, wobei

$$GD(k) = \frac{\sum_{i=1}^{N} \sum_{j=1}^{N-k-1} |I(i,j) - I(i,j+k)| + \sum_{i=1}^{N-k-1} \sum_{j=1}^{N} |I(i,j) - I(i+k,j)|}{2N(N-k-1)}$$

Die fraktale Dimension FD kann aus der Beziehung FD=3-H erhalten werden. Ein kleiner Wert der fraktalen Dimension FD impliziert einen großen Hurst-Exponenten, wodurch feine Texturen repräsentiert werden, während eine große fraktale Dimension FD einen kleinen Hurst-Exponenten H impliziert, wodurch grobe Texturen repräsentiert werden.

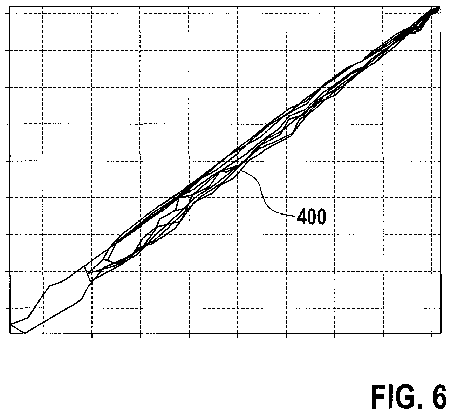

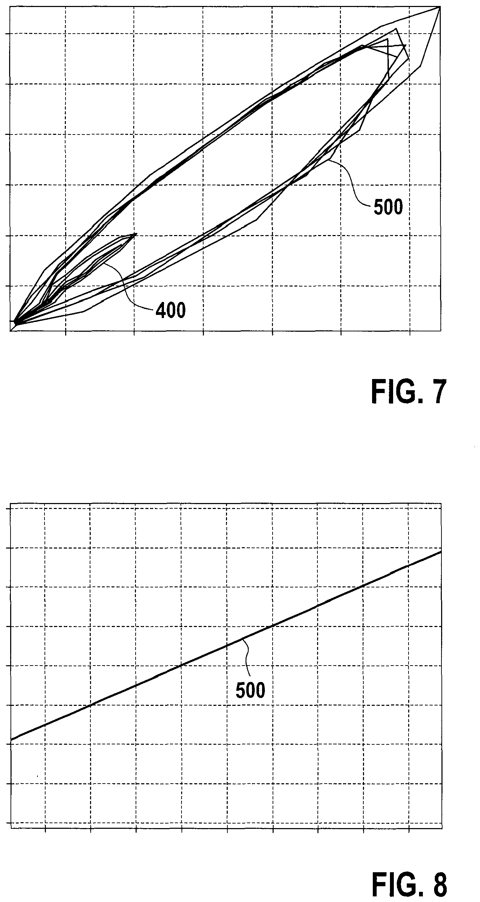

Die Figuren 6 bis 8 zeigen einzelne Beispiele eines in den Phasenraum transformierten dreidimensionalen Signals. In Figur 6 ist lediglich eine Beschleunigungsdynamik 400 gezeigt, während Figur 7 sowohl eine Beschleunigungsdynamik 400 als auch eine Kurvenfahrtdynamik 500 zeigt. Figur 8 zeigt schließlich eine reine Kurvenfahrtdynamik 500. Die Beschleunigungsdynamik 400 stellt somit den Beschleunigungs-/Bremsanteil dar, während die Kurvenfahrtdynamik 500 den Kurvenfahrtanteil darstellt.

Zum Ermitteln des Fahrverhaltens lassen sich Intervalle festlegen, die jeweils einem Fahrverhalten zugeordnet sind. So lässt sich beispielsweise festlegen, dass ein Fahrverhalten bei einer fraktalen Dimension von weniger 2,1 als normal anzusehen ist. Zwischen 2,1 und 2,4 ist das Fahrverhalten als moderat angesehen. Übersteigt die fraktale Dimension jedoch 2,4, so ist das Fahrverhalten als aggressiv einzustufen.

In Figur 6 ist die fraktale Dimension der Beschleunigungsdynamik 400 größer als 2,4, wodurch ein aggressives Verhalten ermittelt wird. In Figur 7 ist zwar die fraktale Dimension der Kurvenfahrdynamik 500 kleiner als 2,1, was auf ein normales Fahrverhalten schließen lassen würde, jedoch ist die fraktale Dimension für die Beschleunigungsdynamik 400 weiterhin über 2,4. Daher ist auch in Figur 7 das Fahrverhalten als aggressiv anzusehen, da hier stets der größere Wert der Kenngröße, d.h. der fraktalen Dimension, maßgeblich ist.

Figur 8 zeigt schließlich, dass lediglich die Kurvenfahrdynamik 500 vorhanden ist. Hier ist die fraktale Dimension kleiner als 2,1. Somit ist das Fahrverhalten als normal einzustufen.

Wie zuvor beschrieben, kann durch die Erfindung ein Rückschluss auf das Fahrverhalten gezogen werden, ohne, dass das dreidimensionale Signal des Beschleunigungssensors gefiltert werden muss. Auch muss keinerlei Kalibrierung des Beschleunigungssensors erfolgen. Somit lässt sich das Fahrverhalten einfach und aufwandsarm ermitteln.

**Patentansprüche**

1.  Verfahren zum Ermitteln eines Fahrverhaltens eines Fahrers eines Fahrzeugs, umfassend die Schritte:

    • Erfassen (100) eines dreidimensionalen Signals eines Beschleunigungssensors (2), wobei das dreidimensionale Signal einen Beschleunigungswert in je eine unabhängige Raumrichtung (x, y, z) umfasst,
    • Berechnen (200) einer Kenngröße des dreidimensionalen Signals, und
    • Ausgeben (300) des Fahrverhaltens basierend auf der Kenngröße über eine Ausgabevorrichtung,

    **dadurch gekennzeichnet dass**

    • die Kenngröße ein Maß für eine Aggressivität eines Fahrverhaltens ist, und
    • die Kenngröße entweder eine fraktale Dimension einer Einbettung des dreidimensionalen Signals und/oder eine Kolmogorow-Entropie des dreidimensionalen Signals umfasst.

2.  Verfahren nach Anspruch 1, **dadurch gekennzeichnet, dass** unterschiedliche Wahrscheinlichkeitsverteilungen für die Kolmogorow-Entropie des dreidimensionalen Signals vordefiniert sind, wobei jeder Wahrscheinlichkeitsverteilung ein vordefiniertes Fahrverhalten zugeordnet ist.

**3.** Verfahren nach einem der vorhergehenden Ansprüche, **dadurch gekennzeichnet, dass** steigende Werte der Kolmogorow-Entropie des dreidimensionalen Signals eine zunehmende Aggressivität des Fahrverhaltens anzeigen.

**4.** Verfahren nach einem der vorhergehenden Ansprüche, **dadurch gekennzeichnet, dass** die Einbettung durch eine nichtlineare Transformation des dreidimensionalen Signals des Beschleunigungssensors erfolgt, wobei durch die nichtlineare Transformation ein Beschleunigungs-/Bremsanteil von einem Kurvenfahrtanteil des dreidimensionalen Signals getrennt wird.

**5.** Verfahren nach Anspruch 4, **dadurch gekennzeichnet, dass** die fraktale Dimension für den Beschleunigungs-/Bremsanteil und den Kurvenfahrtanteil separat ermittelt wird, wobei als Fahrverhalten die höhere der beiden ermittelten fraktalen Dimensionen als Kenngröße verwendet wird.

**6.** Verfahren nach einem der vorhergehenden Ansprüche, **dadurch gekennzeichnet, dass** Intervalle von fraktalen Dimensionen vordefiniert sind, wobei jedem Intervall ein unterschiedliches Fahrverhalten zugewiesen ist.

**7.** Verfahren nach einem der vorhergehenden Ansprüche, **dadurch gekennzeichnet, dass** steigende fraktale Dimensionen eine zunehmende Aggressivität des Fahrverhaltens anzeigen.

**8.** Verfahren nach einem der vorhergehenden Ansprüche, **dadurch gekennzeichnet, dass** die Kenngröße aus dem ungefilterten und/oder unbearbeiteten dreidimensionalen Signal des Beschleunigungssensors (2) ermittelt wird.

**9.** Computerprogrammprodukt umfassend Instruktionen, welche, wenn Sie auf einer Auswerteeinheit einer Anwenderschnittstelle ausgeführt werden, die Auswerteeinheit veranlassen, die Schritte eines Verfahrens nach einem der vorhergehenden Ansprüche auszuführen.

**10.** Vorrichtung (1) zum Ermitteln eines Fahrverhaltens eines Fahrers eines Fahrzeugs, umfassend

  • zumindest einen Beschleunigungssensor (2) zum Erfassen von Beschleunigungswerten in drei unabhängigen Raumrichtungen (x, y, z),
  • eine Ausgabevorrichtung (3) zum Ausgeben des Fahrverhaltens, und
  • ein Steuergerät (4), das mit dem Beschleunigungssensor (2) und der Ausgabevorrichtung (3) zur Signalübertragung verbunden ist, wobei das Steuergerät (4) ausgebildet ist,

    o ein dreidimensionales Signal des Beschleunigungssensors (2) zu erfassen, das die Beschleunigungswerte in jeder Raumrichtung (x, y, z) aufweist,
    ◦ eine Kenngröße des dreidimensionalen Signals zu berechnen, **dadurch gekennzeichnet dass**
    ◦ die Kenngröße ein Maß für eine Aggressivität des Fahrverhaltens ist, und
    ◦ die Kenngröße entweder eine fraktale Dimension einer Einbettung des dreidimensionalen Signals und/oder eine Kolmogorow-Entropie des dreidimensionalen Signals umfasst.

## Claims

**1.** Method for determining a driving behaviour of a driver of a vehicle, comprising the steps of:

  • detecting (100) a three-dimensional signal of an accelerator sensor (2), wherein the three-dimensional signal comprises an acceleration value in in each case one independent spatial direction (x, y, z),
  • calculating (200) a characteristic variable of the three-dimensional signal, and
  • outputting (300) the driving behaviour on the basis of the characteristic variable via an output device, **characterized in that**
  • the characteristic variable is a measure of the aggressivity of a driving behaviour, and
  • the characteristic variable comprises either a fractal dimension of embedding of the three-dimensional signal and/or Kolmogorov entropy of the three-dimensional signal.

**2.** Method according to Claim 1, **characterized in that** different probability distributions are predefined for the Kolmogorov entropy of the three-dimensional signal, wherein each probability distribution is assigned a predefined driving behaviour.

3. Method according to one of the preceding claims, **characterized in that** rising values of the Kolmogorov entropy of the three-dimensional signal indicate increasing aggressivity of the driving behaviour.

4. Method according to one of the preceding claims, **characterized in that** the embedding is carried out by means of a non-linear transformation of the three-dimensional signal of the acceleration sensor, wherein the non-linear transformation separates an acceleration/braking component from a cornering component of the three-dimensional signal.

5. Method according to Claim 4, **characterized in that** the fractal dimension for the acceleration/braking component and that for the cornering component are determined separately, wherein the higher of the two determined fractal dimensions is used as a characteristic variable as driving behaviour.

6. Method according to one of the preceding claims, **characterized in that** intervals of fractal dimensions are predefined, wherein each interval is assigned a different driving behaviour.

7. Method according to one of the preceding claims, **characterized in that** rising fractal dimensions indicate increasing aggressivity of the driving behaviour.

8. Method according to one of the preceding claims, **characterized in that** the characteristic variable is determined from the unfiltered and/or unprocessed three-dimensional signal of the acceleration sensor (2).

9. Computer program product comprising instructions which, when executed on an evaluation unit of a user interface, cause the evaluation unit to execute the steps of a method according to one of the preceding claims.

10. Device (1) for determining a driving behaviour of a driver of a vehicle, comprising:

   • at least one acceleration sensor (2) for determining acceleration values in three independent spatial directions (x, y, z),
   • an output device (3) for outputting the driving behaviour, and
   • a control device (4) which is connected to the acceleration sensor (2) and the output device (3) in order to transmit signals, wherein the control device (4) is designed

      o to detect a three-dimensional signal of the acceleration sensor (2), which signal has the acceleration values in each spatial direction (x, y, z),
      o to calculate a characteristic variable of the three-dimensional signal, **characterized in that**
      o the characteristic variable is a measure of the aggressivity of the driving behaviour, and
      o the characteristic variable comprises either a fractal dimension of embedding of the three-dimensional signal and/or Kolmogorov entropy of the three-dimensional signal.

**Revendications**

1. Procédé de détermination d'un comportement de conduite d'un conducteur d'un véhicule, le procédé comprenant les étapes suivantes :

   • détecter (100) un signal tridimensionnel d'un capteur d'accélération (2), le signal tridimensionnel incluant une valeur d'accélération dans chaque direction spatiale indépendante (x, y, z),
   • calculer (200) un paramètre du signal tridimensionnel, et
   • délivrer en sortie (300) le comportement de conduite en fonction du paramètre par le biais d'un dispositif de délivrance en sortie,

   **caractérisé en ce que**

   • le paramètre est une mesure de l'agressivité du comportement de conduite, et
   • le paramètre comprend soit une dimension fractale d'un plongement du signal tridimensionnel et/ou une entropie de Kolmogorov du signal tridimensionnel.

2. Procédé selon la revendication 1, **caractérisé en ce que** différentes distributions de probabilité sont prédéfinies pour l'entropie de Kolmogorov du signal tridimensionnel, chaque distribution de probabilité étant associée à un comportement de conduite prédéfini.

3. Procédé selon l'une des revendications précédentes, **caractérisé en ce que** des valeurs croissantes de l'entropie de Kolmogorov du signal tridimensionnel indiquent une agressivité croissante du comportement de conduite.

4. Procédé selon l'une des revendications précédentes, **caractérisé en ce que** le plongement est effectué par une transformation non linéaire du signal tridimensionnel du capteur d'accélération, une composante accélération/freinage étant séparée d'une composante de virage du signal tridimensionnel par la transformation non linéaire.

5. Procédé selon la revendication 4, **caractérisé en ce que** la dimension fractale de la composante d'accélération/freinage et celle de la composante de virage sont déterminées séparément, le paramètre utilisé comme comportement de conduite étant celle des deux dimensions fractales déterminées qui est la plus élevée.

6. Procédé selon l'une des revendications précédentes, **caractérisé en ce que** des intervalles de dimensions fractales sont prédéfinis, un comportement de conduite différent étant attribué à chaque intervalle.

7. Procédé selon l'une des revendications précédentes, **caractérisé en ce que** des dimensions fractales croissantes indiquent une agressivité croissante du comportement de conduite.

8. Procédé selon l'une des revendications précédentes, **caractérisé en ce que** le paramètre est déterminé à partir du signal tridimensionnel non filtré et/ou non traité du capteur d'accélération (2).

9. Progiciel comprenant des instructions qui, lorsqu'elles sont exécutées sur une unité d'évaluation d'une interface utilisateur, ordonnent à l'unité d'évaluation d'exécuter les étapes d'un procédé selon l'une des revendications précédentes.

10. Dispositif (1) de détermination d'un comportement de conduite d'un conducteur de véhicule, le dispositif comprenant

   • au moins un capteur d'accélération (2) destiné à acquérir des valeurs d'accélération dans trois directions spatiales indépendantes (x, y, z),
   • un dispositif de délivrance en sortie (3) destiné à délivrer en sortie le comportement de conduite, et
   • une unité de commande (4) qui est reliée au capteur d'accélération (2) et au dispositif de délivrance en sortie (3) pour transmettre des signaux, l'unité de commande (4) étant conçue pour

      o enregistrer un signal tridimensionnel du capteur d'accélération (2), qui comporte les valeurs d'accélération dans chaque direction spatiale (x, y, z),
      o calculer un paramètre du signal tridimensionnel, **caractérisé en ce que**
      o le paramètre est une mesure de l'agressivité du comportement de conduite, et
      o le paramètre inclut une dimension fractale d'un plongement du signal tridimensionnel et/ou une entropie de Kolmogorov du signal tridimensionnel.

**FIG. 1**

**FIG. 2**

K2

K1

K3

K=f(K1,K2,K3)

K

time

**FIG. 3**

1.00
0.75
0.50
0.25
0

0    15    30    60    75    100    K=f(K1,K2,K3)

**FIG. 4**

FIG. 5

400

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140191858 A1
- US 20150081404 A1
- WO 2015121639 A1